# EUROPEAN PATENT SPECIFICATION

(11) **EP 2 652 636 B1**
(45) Date of publication and mention of the grant of the patent: **03.10.2018**
(21) Application number: 11801923.1
(22) Date of filing: 06.12.2011
(51) Int. Cl.: G06F 15/173, G06F 12/08, G06F 13/40

(54) **SPLIT TRAFFIC ROUTING IN A DISTRIBUTED SHARED MEMORY MULTIPROCESSOR**
GETEILTE VERKEHRSFÜHRUNG IN EINEM VERTEILTEN MULTIPROZESSOR MIT GEMEINSAMRM SPEICHER
DIVISION DU ROUTAGE DU TRAFIC DANS UN MULTIPROCESSEUR RÉPARTI À MÉMOIRE PARTAGÉE

(30) Priority: 15.12.2010 US 968857
(43) Date of publication of application: 23.10.2013
(73) Proprietor: Advanced Micro Devices, Inc., Santa Clara, CA 95054 (US)
(72) Inventor: HUGHES, William A., San Jose, CA 95125 (US); YANG, Chenping, Fremont, California 94539 (US); FERTIG, Michael K., Sunnyvale, California 94086 (US); LEPAK, Kevin M., Austin, Texas 78759 (US)
(74) Representative: Brookes IP
(86) International application number: PCT/US2011/063463
(87) International publication number: WO 2012/082460

(56) References cited:
- PAT CONWAY ET AL: "Cache Hierarchy and Memory Subsystem of the AMD Opteron Processor", IEEE MICRO, IEEE SERVICE CENTER, LOS ALAMITOS, CA, US, vol. 30, no. 2, 1 March 2010 (2010-03-01), pages 16-29, XP011307189, ISSN: 0272-1732
- CONWAY P ET AL: "The AMD Opteron Northbridge Architecture", IEEE MICRO, IEEE SERVICE CENTER, LOS ALAMITOS, CA, US, vol. 27, no. 2, 1 March 2007 (2007-03-01), pages 10-21, XP011190025, ISSN: 0272-1732, DOI: 10.1109/MM.2007.43

## Description

### CROSS REFERENCE TO RELATED APPLICATIONS

This application claims the benefit of U.S. Application No. 2012-0155273 filed December 15, 2010.

### FIELD OF INVENTION

This application is related to traffic routing of a processor.

### BACKGROUND

In a processor composed of multiple processing units, each having several cores, or compute units, there are links of varying bandwidth between the cores and memory caches which permit traffic transfer. Traffic congestion on any of these links degrades performance of the processor. Diversion of traffic routing to alleviate congestion may result in additional hops to reach the destination, resulting in increased latency for a single transfer. The paper titled "Cache Hierarchy and Memory Subsystem of the AMD Opteron Processor" by PAT CONWAY ET AL (IEEE MICRO, vol. 30, no. 2, 1 March 2010) describes a cache coherent shared distributed multiprocessor system. The multiprocessor system is made up of multiple multi-chip packages, each package comprising two six-core processor nodes. In one configuration two multi-chip packages are combined to provide a 4 processor node system with 24 cores. Each core has a private L1 and L2 cache. The six cores of a node share a L3 cache which serves as a victim cache for the L1 and L2 caches, i.e. there is one victim cache per processor node. The four nodes are connected by 16-bit wide cache coherent Hypertransport links to their respective vertical and horizontal neighbours. There are also two 8-bit wide diagonal cache coherent Hypertransport links. A crossbar in each node provides in combination with a routing table direct paths between all nodes.

### SUMMARY OF EMBODIMENTS

The invention is defined by the independent claims. A multi-chip module configuration includes two processors, each having two nodes, each node including multiple cores or compute units. Each node is connected to the other nodes by links that are high bandwidth or low bandwidth. Routing of traffic between the nodes is controlled at each node according to a routing table and/or a control register that optimize bandwidth usage and traffic congestion control.

### BRIEF DESCRIPTION OF THE DRAWINGS

Figure 1 is an example functional block diagram of a processor node, including several computing units, a routing table and a crossbar unit that interfaces with links to other nodes; and
Figures 2-4 are example functional block diagrams of a processor configuration having traffic flow across various links between processor nodes.

### DETAILED DESCRIPTION OF THE EMBODIMENTS

In this application, a processor may include a plurality of nodes, with each node having a plurality of computing units. A multi-chip processor is configured to include at least two processors with means to link the nodes to other nodes, and to memory caches.

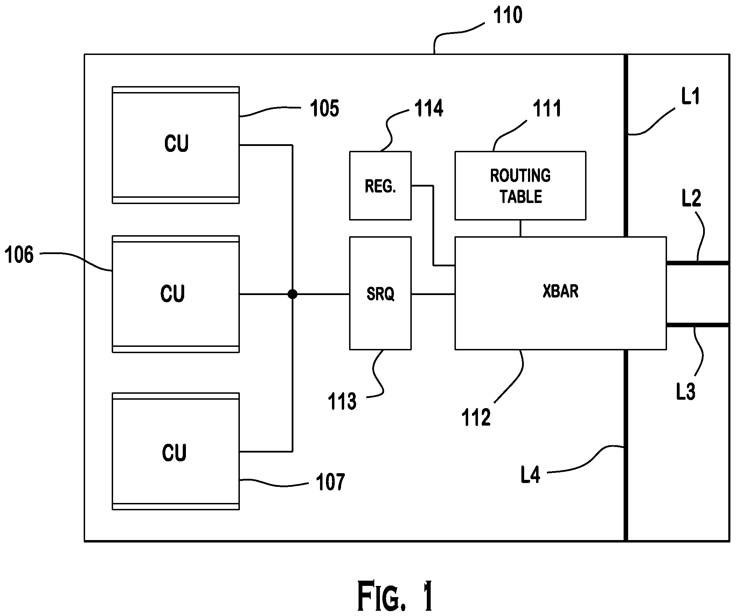

Figure 1 is an example functional block diagram of a processor 110. The processor 110 may be any one of a variety of processors such as a Central Processing Unit (CPU) or a Graphics Processing Unit (GPU). For instance, it may be a x86 processor that implements x86 64-bit instruction set architecture and used in desktops, laptops, servers, and superscalar computers, or it may be an Advanced RISC (Reduced Instruction Set Computer) Machine (ARM) processor that is used in mobile phones or digital media players. Other embodiments of the processor are contemplated, such as Digital Signal Processors (DSP) that are particularly useful in the processing and implementation of algorithms related to digital signals, such as voice data and communication signals, and microcontrollers that are useful in consumer applications, such as printers and copy machines.

As shown, processor 110 includes computing units 105, 106 and 107, which are connected to a system request queue (SRQ) 113 used as a command queue for the computing units 105, 106, 107. A crossbar (Xbar) switch 112 interfaces between links L1, L2, L3 and L4 and the SQR 113. A routing table 111 and a control register 114 are each configured to control the crossbar interface 112 and the traffic routing over the links L1, L2, L3 and L4. While four links L1, L2, L3 and L4 are depicted in Figure 1, this is by way of example, and more or less links may be implemented in the processor node 110 configuration, including links of various throughput capacities.

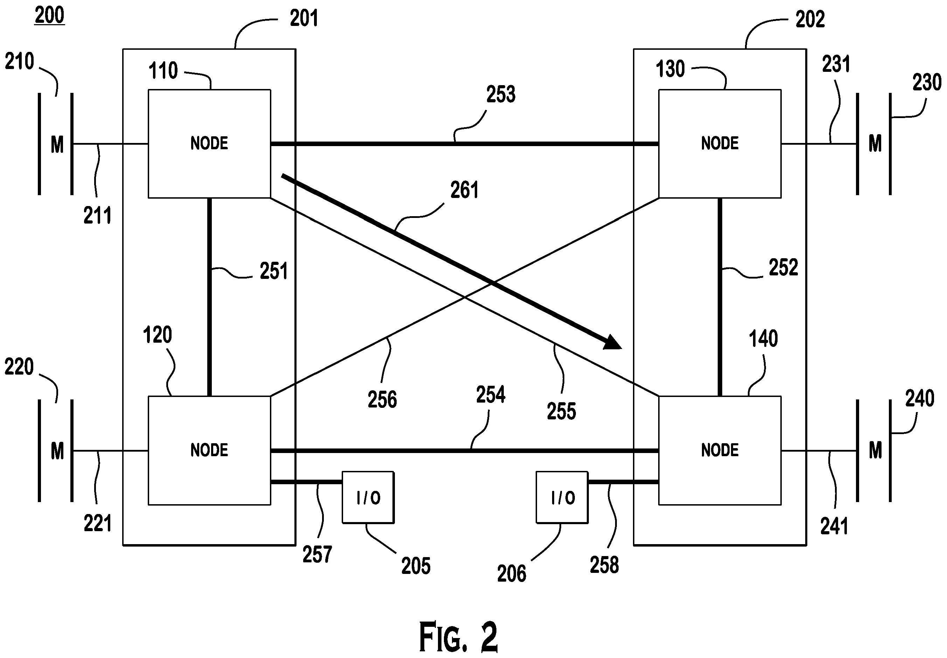

Figure 2 shows an example functional block diagram of a multi-processor configuration 200, where two-node processors 201 and 202 are connected by links 253, 254, 255 and 256. Processor 201 includes processor nodes 110 and 120 connected by link 251. Memory cache 210 is connected to processor node 110 by a memory channel 211 and memory cache 220 is connected to the processor node 120 by memory channel 221. The processor 202 includes processor nodes 130 and 140, connected by link 252. Memory channel 231 connects memory cache 230 to the processor node 130, and memory channel 241 connects memory cache 240 to the processor node 140. Links 257 and 258 are available to connect I/O devices 205, 206, such as network cords and graphic drivers, to the processors 201 and 202. In this example configuration, each of cross links 255 and 256 are a low bandwidth connection (e.g., an 8-bit connection, or a half-link), while links 251, 252, 253 and 254 are high bandwidth connections (e.g., a 16-bit connection, or a full-link). Alternatively, any of links 251, 252, 253 and 254 may each include multiple connections (e.g., one full link and one half link). In this example, the routing table 111 provides a direct path for all node-to-node transfers. For example, if processor node 110 needs to send a request 261 to processor node 140, the cross link 255 is used as the direct path. Using this form of routing selection, there is a low latency for a single request. Statistically, all links will carry an equal distribution of traffic. Therefore, the upper bandwidth limit for the traffic rate of the multi-processor configuration 200 is set by the smaller bandwidth links 255 and 256.

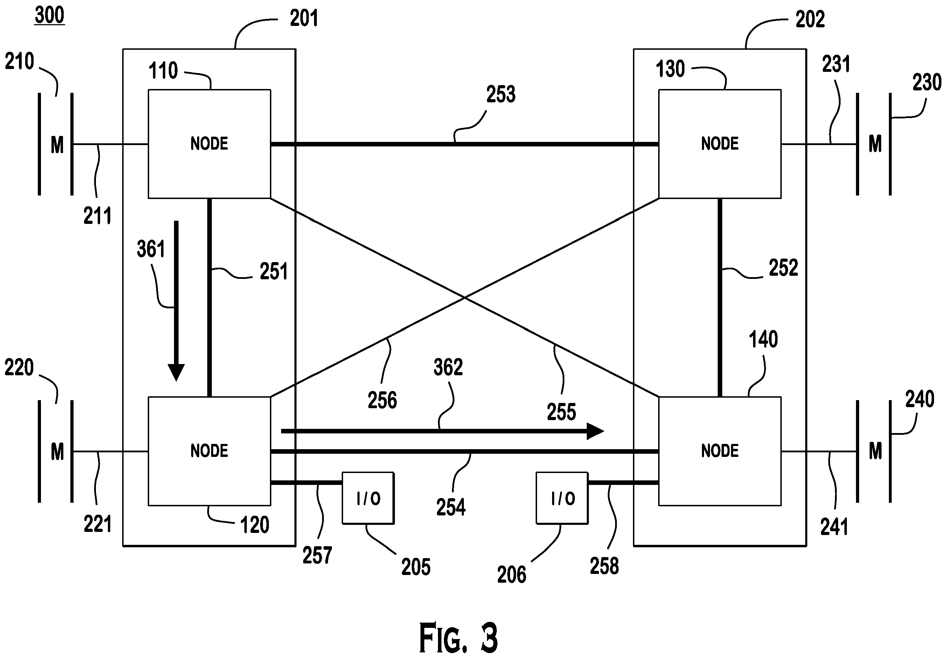

Figure 3 shows an example functional block diagram of a block diagram of a multi-processor configuration 300, which resembles the configuration 200 shown in Figure 2. In this example, routing table 111 provides an alternative routing scheme that keeps traffic on the high bandwidth links 251, 252, 253 and 254. For example, if processor node 110 has a request to send to processor node 140, the routing is configured as a two-hop request 361, 362 along links 251 and 254. Accordingly, the latency for this single request is approximately double the latency of the single-hop request 261. However, the upper bandwidth limit for request traffic according to configuration 300 is higher based on the minimum bandwidth of the links 251, 252, 253, 254. An optional alternative for this configuration 300 is for the routing table 111 to divert request traffic on the high bandwidth links 251, 252, 253, and 254, while sending response traffic on the low bandwidth links 255 and 256, where response traffic is significantly lower than request traffic. This keeps the upper bandwidth limit for the multi-processor configuration 300 based on the minimum bandwidth of the high bandwidth links 251, 252, 253, and 254, since most of the traffic is diverted there.

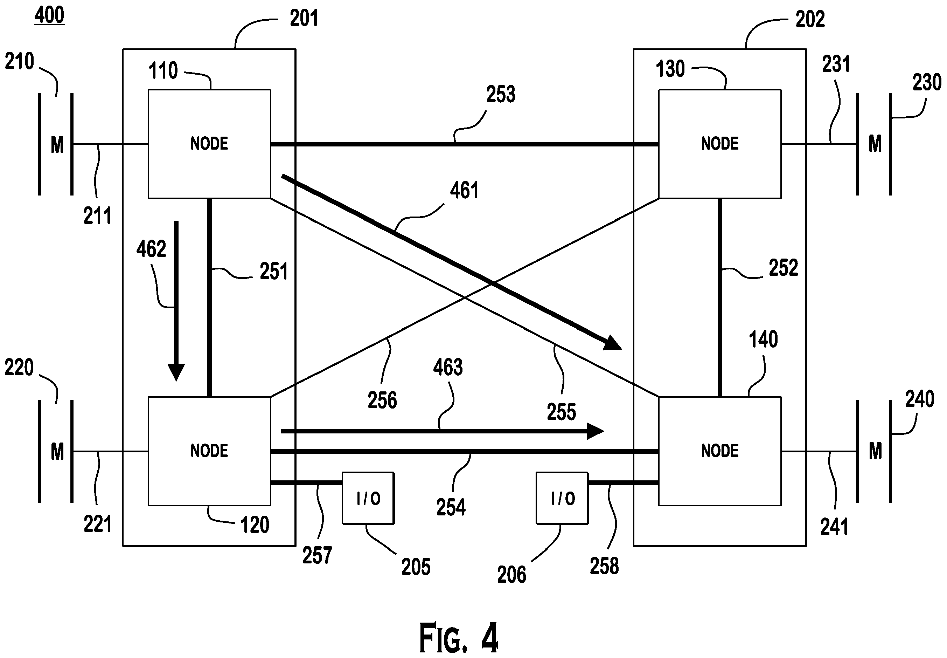

Figure 4 shows an example functional block diagram of a multi-processor configuration 400 for a split traffic routing scheme. The physical configuration resembles that of configurations 200 and 300. However, the control register 114 is configured to control traffic based on whether the traffic is related to victim requests and their associated responses, or whether the traffic is related to non-victim requests and responses. According to this routing scheme, only victim requests and associated responses follow the high bandwidth links 251, 252, 253 and 254. Since victim traffic is generally not sensitive to latency, a two-hop transmission routing scheme for this traffic does not impede processor performance. This routing scheme is also favorable since there is generally higher victim traffic volume than non-victim traffic, which can be better served by the higher bandwidth links 251, 252, 253, 254. Moreover, evicted victims are not required to be ordered, and are better suited for the longer routing paths, compared to non-victim requests.

In order to enable the victim requests and responses to be routed according to the split routing scheme along the high bandwidth links, a special mode bit cHTVicDistMode is set in the control register 114 (e.g., a coherent link traffic distribution register). For example, the compute unit 105, 106, 107 may set a value of 1 for the mode bit cHTVicDistMode when a link pair traffic distribution is enabled, such as processor node pair 110 and 140. Alternatively, the mode bit cHTVicDistMode may be set to 1 to indicate that the split traffic scheme is enabled without having enabled the pair traffic distribution. In addition, the following settings may be made by the compute unit 105, 106, 107 to the control register 114 to enable and define parameters for the split routing scheme. A distribution node identification bit in element DistNode [5:0] is set for each of the processor nodes involved with the distribution (e.g., for this 5-bit element with binary value range of 0 to 31, a value 0 may be assigned to processor node 110, and a value 3 may be assigned to processor node 140). A destination link element DstLnk [7:0] is specified for a single link. For example, for this 8-bit element, bit 0 may be assigned to link 251, bit 1 may be assigned to link 253, bit 2 may be assigned to link 255, and setting the destination link to link 251 would be achieved by setting bit 0 to value 1. Using this enablement setting scheme for processor node 110 by way of example, when a victim packet is detected and heading toward the distribution node identified by the bit DistNode, such as processor node 140, the victim packet is routed to the destination link that is specified by the bit DstLnk (high bandwidth link 251) instead of the destination link as defined in the routing table 111 (low bandwidth link 255). Additional refinement to the split traffic routing scheme can be achieved by providing indicators as to whether the split routing scheme should handle a victim request or a victim response or both. To indicate that a victim request is enabled for the split routing scheme, a coherent request distribution enable bit cHTReqDistEn is set to 1. If it is desired to control only the associated victim response, or to control the victim response additionally to the victim request using the split traffic routing, a coherent response distribution enable bit cHTRspDistEn is set to 1.

In a variation to the above described embodiment, the routing table 111 may be configured with the parameters of the split traffic routing scheme such that the split traffic routing is enabled to be executed directly according to the routing indicated in the routing table 111, instead of the control register 114.

The victim distribution mode for a processor node in the configuration illustrated in Figure 4 (i.e., split traffic routing) is enabled in specific conditions, including by way of example, only if the following are true: (1) a victim distribution processor node is enabled for the processor; (2) the victim distribution processor node connects to another processor node, a destination processor node, directly with only one unganged link hop on a low bandwidth link and indirectly through two ganged link hops on at least high bandwidth links. For example, the method described above with respect to Figure 4 pertains to a distribution processor node 110 and destination processor node 140, which satisfy the above specific conditions.

Table 1 shows an example of a utilization table comparing link utilization based on implementation of the above configurations 200 and 400, having read:write ratios that are a function of the workload. As shown, when routing is evenly distributed across high bandwidth links and low bandwidth links (i.e. configuration 200), the high bandwidth link utilization is 50% which corresponds to the 2:1 link size ratio. Using the split routing scheme of configuration 400, the high bandwidth and low bandwidth links can be more evenly utilized.

**TABLE 1**

| Configuration | Read:Write ratio | High:Low Bandwidth Link Size Ratio | Low bandwidth link utilization | High bandwidth link utilization |
|---|---|---|---|---|
| 200 | 2:1 | 2:1 | 100% | 50% |
| 400 | 2:1 | 2:1 | 98% | 100% |
| 400 | 3:1 | 2:1 | 92% | 100% |

Although features and elements are described above in particular combinations, each feature or element can be used alone without the other features and elements or in various combinations with or without other features and elements. The apparatus described herein may be manufactured by using a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Embodiments of the present invention may be represented as instructions and data stored in a computer-readable storage medium. For example, aspects of the present invention may be implemented using Verilog, which is a hardware description language (HDL). When processed, Verilog data instructions may generate other intermediary data (e.g., netlists, GDS data, or the like) that may be used to perform a manufacturing process implemented in a semiconductor fabrication facility. The manufacturing process may be adapted to manufacture semiconductor devices (e.g., processors) that embody various aspects of the present invention.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine. Such processors may be manufactured by configuring a manufacturing process using the results of processed hardware description language (HDL) instructions (such instructions capable of being stored on a computer readable media). The results of such processing may be maskworks that are then used in a semiconductor manufacturing process to manufacture a processor which implements aspects of the present invention.

## Claims

1. A method for routing victim traffic in a cache coherent distributed shared memory multi-processor (200) comprising:
a first processor node (110) connected to a second processor node (140) by a low bandwidth coherent link (261);
a third processor node (12 0) connected to the first processor node by a first high bandwidth coherent link (251) and connected to the second processor node by a second high bandwidth coherent link (254);
a plurality of memory caches, including at least a first memory cache coupled to the first processor node, a second memory cache coupled to the second processor node and a third memory cache coupled to the third processor node, wherein victim traffic is data evicted from at least one of the plurality of memory caches; monitoring victim traffic and non-victim traffic between nodes of a processor;
wherein each of the processor nodes comprise:
a plurality of compute units (105, 106, 107) connected to a cross bar switch (112), the cross bar switch configured to control traffic sent from the compute units to a designated link;
**characterized by** the method comprising:
selecting, by a compute unit of the first processor node by setting a control register (114) having a defined routing scheme that determines the designated link, a routing scheme for the victim traffic that utilizes the high bandwidth coherent links between the nodes and a routing scheme for the non-victim traffic that utilizes the low bandwidth coherent link between the nodes.

2. The method as in claim 1, wherein selecting, by the compute unit of the first processor node by setting a control register having the defined routing scheme that determines the designated link further includes setting a routing mode bit when distribution is enabled for a particular pair of processor nodes.

3. The method as in claim 2, wherein selecting, by the compute unit of the first processor node by setting a control register having the defined routing scheme that determines the designated link further includes:
setting a distribution node identification bit for each of the processor nodes involved with the distribution; and
setting a destination link element.

4. The method as in claim 1, wherein selecting, by the compute unit of the first processor node by setting a control register having the defined routing scheme that determines the designated link further includes setting a coherent request distribution enable bit to indicate that the routing scheme is enabled to handle victim requests.

5. The method as in claim 1, wherein selecting, by the compute unit of the first processor node by setting a control register having the defined routing scheme that determines the designated link further includes setting a coherent request distribution enable bit to indicate that the routing scheme is enabled to handle victim responses.

6. The method as in claim 1, wherein the victim traffic on the high bandwidth coherent links includes a ganged two-hop request and the non-victim traffic on the low bandwidth coherent link includes an unganged one-hop request.

7. A cache coherent distributed shared memory multi-processor, comprising:
a first processor node connected to a second processor node by a low bandwidth coherent link;
a third processor node connected to the first processor node by a first high bandwidth coherent link and connected to the second processor node by a second high bandwidth coherent link;
a plurality of memory caches, including at least a first memory cache coupled to the first processor node, a second memory cache coupled to the second processor node and a third memory cache coupled to the third processor node, wherein victim traffic is data evicted from at least one of the plurality of memory caches;
wherein each of the processor nodes comprise:
a plurality of compute units connected to a cross bar switch, the cross bar switch configured to control traffic sent from the compute units to a designated link;
**characterized by**:
the compute units of the first processor node configured to set a control register having a defined routing scheme that determines the designated link, such that when executing the routing scheme, the cross bar switch is controlled to send victim traffic on the first high bandwidth coherent link and to send non-victim traffic on the low bandwidth coherent link.

8. The processor as in claim 7, wherein at least one of the plurality of compute units sets a routing mode bit in the control register when distribution is enabled for a particular pair of processor nodes.

9. The processor as in claim 8, wherein at least one of the plurality of compute units sets a distribution node identification bit in the control register for each of the processor nodes involved with the distribution and sets a destination link element.

10. The processor as in claim 7, wherein at least one of the plurality of compute units sets a coherent request distribution enable bit in the control register to indicate that the routing is enabled to handle victim requests.

11. The processor as in claim 7, wherein at least one of the plurality of compute units sets a coherent request distribution enable bit in the control register to indicate that the routing is enabled to handle victim responses.

12. The processor as in claim 7, wherein the victim traffic on the high bandwidth coherent links includes a ganged two-hop request and the non-victim traffic on the low bandwidth coherent link includes an unganged one-hop request.

13. A computer-readable storage medium storing a set of instructions for execution by one or more processors for routing victim traffic in a cache coherent distributed shared memory multi-processor comprising:
a first processor node connected to a second processor node by a low bandwidth coherent link;
a third processor node connected to the first processor node by a first high bandwidth coherent link and connected to the second processor node by a second high bandwidth coherent link;
a plurality of memory caches, including at least a first memory cache coupled to the first processor node, a second memory cache coupled to the second processor node and a third memory cache coupled to the third processor node, wherein victim traffic is data evicted from at least one of the plurality of memory caches; monitoring victim traffic and non-victim traffic between nodes of a processor;
wherein each of the processor nodes comprise:
a plurality of compute units connected to a cross bar switch, the cross bar switch configured to control traffic sent from the compute units to a designated link;
the set of instructions **characterized by**:
selecting, by a compute unit of the first processor node by setting a control register having a defined routing scheme that determines the designated link, a routing scheme for the victim traffic that utilizes the high bandwidth coherent links between the nodes and a routing scheme for the non-victim traffic that utilizes the low bandwidth coherent link between the nodes.

14. The medium as in claim 13, wherein the victim traffic on the high bandwidth coherent links includes a ganged two-hop request and the non-victim traffic on the low bandwidth coherent link includes an unganged one-hop request.

## Patentansprüche

1. Verfahren zur Führung von Victim-Verkehr in einem cachekohärenten verteilten Multiprozessor (200) mit gemeinsamem Speicher, umfassend:
einen ersten Prozessorknoten (110), der mit einem zweiten Prozessorknoten (140) über eine kohärente Verbindung (261) mit einer geringen Bandbreite verbunden ist;
einen dritten Prozessorknoten (120), der mit dem ersten Prozessorknoten durch eine erste kohärente Verbindung (251) mit einer hohen Bandbreite verbunden ist und der mit dem zweiten Prozessorknoten durch eine zweite kohärente Verbindung (254) mit einer hohen Bandbreite verbunden ist;
eine Vielzahl von Speichercaches, einschließlich wenigstens eines ersten Speichercaches, der mit dem ersten Prozessorknoten gekoppelt ist, eines zweiten Speichercaches, der mit dem zweiten Prozessorknoten gekoppelt ist, und eines dritten Speichercaches, der mit dem dritten Prozessorknoten gekoppelt ist, wobei der Victim-Verkehr Daten darstellt, die von wenigstens einem von der Vielzahl von Speichercaches ausgeworfen wurden; Überwachen von Victim-Verkehr und Nicht-Victim-Verkehr zwischen Knoten eines Prozessors;
wobei jeder der Prozessorknoten Folgendes umfasst:
eine Vielzahl von Recheneinheiten (105, 106, 107), die mit einem Kreuzschienenschalter (112) verbunden ist, wobei der Kreuzschienenschalter konfiguriert ist, um einen Verkehr zu steuern, der von den Recheneinheiten an eine benannte Verbindung gesendet wird;
**dadurch gekennzeichnet, dass** das Verfahren Folgendes umfasst:
Auswählen durch eine Recheneinheit des ersten Prozessorknotens durch ein Einstellen eines Steuerregisters (114), das ein definiertes Führungsschema, das die benannte Verbindung bestimmt, eines Führungsschemas für den Victim-Verkehr, das die kohärenten Verbindungen mit einer hohen Bandbreite zwischen den Knoten nutzt, und eines Führungsschemas für den Nicht-Victim-Verkehr, das die kohärente Verbindung mit einer geringen Bandbreite zwischen den Knoten nutzt.

2. Verfahren nach Anspruch 1, wobei das Auswählen durch die Recheneinheit des ersten Prozessorknotens durch das Einstellen eines Steuerregisters, das das definierte Führungsschema aufweist, das die benannte Verbindung bestimmt, ferner ein Einstellen eines Führungsmodusbits einschließt, wenn eine Verteilung für ein spezielles Paar von Prozessorknoten aktiviert ist.

3. Verfahren nach Anspruch 2, wobei das Auswählen durch die Recheneinheit des ersten Prozessorknotens durch das Einstellen eines Steuerregisters, das das definierte Führungsschema aufweist, das die benannte Verbindung bestimmt, ferner Folgendes einschließt:
Einstellen eines Verteilungsknotenidentifikationsbits für jeden der Prozessorknoten, der an der Verteilung beteiligt ist; und
Einstellen eines Zielverbindungselements.

4. Verfahren nach Anspruch 1, wobei das Auswählen durch die Recheneinheit des ersten Prozessorknotens durch das Einstellen eines Steuerregisters, das das definierte Führungsschema aufweist, das die benannte Verbindung bestimmt, ferner ein Einstellen eines kohärenten Anfrageverteilungsaktivierungsbits einschließt, um anzuzeigen, dass das Führungsschema aktiviert ist, um Victim-Anfragen zu bearbeiten.

5. Verfahren nach Anspruch 1, wobei das Auswählen durch die Recheneinheit des ersten Prozessorknotens durch das Einstellen eines Steuerregisters, das das definierte Führungsschema aufweist, das die benannte Verbindung bestimmt, ferner ein Einstellen eines kohärenten Anfrageverteilungsaktivierungsbit einschließt, um anzuzeigen, dass das Führungsschema aktiviert ist, um Victim-Reaktionen zu bearbeiten.

6. Verfahren nach Anspruch 1, wobei der Victim-Verkehr auf den kohärenten Verbindungen mit einer hohen Bandbreite eine gekoppelte Zwei-Sprung-Anfrage einschließt und der Nicht-Victim-Verkehr auf der kohärenten Verbindung mit einer geringen Bandbreite eine nichtgekoppelte Ein-Sprung-Anfrage einschließt.

7. Cachekohärenter verteilter Multiprozessor mit gemeinsamen Speicher, umfassend:
einen ersten Prozessorknoten, der mit einem zweiten Prozessorknoten über eine kohärente Verbindung mit einer geringen Bandbreite verbunden ist;
einen dritten Prozessorknoten, der mit dem ersten Prozessorknoten durch eine erste kohärente Verbindung mit einer hohen Bandbreite verbunden ist und der mit dem zweiten Prozessorknoten durch eine zweite kohärente Verbindung mit einer hohen Bandbreite verbunden ist;
eine Vielzahl von Speichercaches, einschließlich wenigstens eines ersten Speichercaches, der mit dem ersten Prozessorknoten gekoppelt ist, eines zweiten Speichercaches, der mit dem zweiten Prozessorknoten gekoppelt ist, und eines dritten Speichercaches, der mit dem dritten Prozessorknoten gekoppelt ist, wobei der Victim-Verkehr Daten darstellt, die von wenigstens einem von der Vielzahl von Speichercaches ausgeworfen wurden;
wobei jeder der Prozessorknoten Folgendes umfasst:
eine Vielzahl von Recheneinheiten, die mit einem Kreuzschienenschalter verbunden ist, wobei der Kreuzschienenschalter konfiguriert ist, um einen Verkehr zu steuern, der von den Recheneinheiten an eine benannte Verbindung gesendet wird;
**dadurch gekennzeichnet, dass**:
die Recheneinheiten des ersten Prozessorknotens konfiguriert sind, um ein Steuerregister einzustellen, das ein definiertes Führungsschema aufweist, das die benannte Verbindung bestimmt, sodass, wenn er das Führungsschema ausführt, der Kreuzschienenschalter gesteuert wird, um einen Victim-Verkehr auf der ersten kohärenten Verbindung mit einer hohen Bandbreite zu senden und einen Nicht-Victim-Verkehr auf der kohärenten Verbindung mit einer niedrigen Bandbreite zu senden.

8. Prozessor nach Anspruch 7, wobei wenigstens eine der Vielzahl von Recheneinheiten ein Führungsmodusbit in dem Steuerregister einstellt, wenn eine Verteilung für ein spezielles Paar von Prozessorknoten aktiviert ist.

9. Prozessor nach Anspruch 8, wobei wenigstens eine der Vielzahl von Recheneinheiten ein Verteilungsknotenidentifikationsbit in dem Steuerregister für jeden der Prozessorknoten einstellt, der an der Verteilung beteiligt ist, und ein Verteilungsverbindungselement einstellt.

10. Prozessor nach Anspruch 7, wobei wenigstens eine der Vielzahl von Recheneinheiten ein kohärentes Anfrageverteilungsaktivierungsbit in dem Steuerregister einstellt, um anzuzeigen, dass die Führung aktiviert ist, um Victim-Anfragen zu bearbeiten.

11. Prozessor nach Anspruch 7, wobei wenigstens eine der Vielzahl von Recheneinheiten ein kohärentes Anfrageverteilungsaktivierungsbit in dem Steuerregister einstellt, um anzuzeigen, dass die Führung aktiviert ist, um Victim-Reaktionen zu bearbeiten.

12. Prozessor nach Anspruch 7, wobei der Victim-Verkehr auf den kohärenten Verbindungen mit einer hohen Bandbreite eine gekoppelte Zwei-Sprung-Anfrage einschließt und der Nicht-Victim-Verkehr auf der kohärenten Verbindung mit einer geringen Bandbreite eine nichtgekoppelte Ein-Sprung-Anfrage einschließt.

13. Computerlesbares Speichermedium, das einen Satz von Anweisungen zur Ausführung durch einen oder mehrere Prozessoren speichert, um Victim-Verkehr in einem cachekohärenten verteilten Multiprozessor mit gemeinsamen Speicher zu führen, umfassend:
einen ersten Prozessorknoten, der mit einem zweiten Prozessorknoten über eine kohärente Verbindung mit einer geringen Bandbreite verbunden ist;
einen dritten Prozessorknoten, der mit dem ersten Prozessorknoten durch eine erste kohärente Verbindung mit einer hohen Bandbreite verbunden ist und der mit dem zweiten Prozessorknoten durch eine zweite kohärente Verbindung mit einer hohen Bandbreite verbunden ist;
eine Vielzahl von Speichercaches, einschließlich wenigstens eines ersten Speichercaches, der mit dem ersten Prozessorknoten gekoppelt ist, eines zweiten Speichercaches, der mit dem zweiten Prozessorknoten gekoppelt ist, und eines dritten Speichercaches, der mit dem dritten Prozessorknoten gekoppelt ist, wobei der Victim-Verkehr Daten darstellt, die von wenigstens einem von der Vielzahl von Speichercaches ausgeworfen wurden; Überwachen von Victim-Verkehr und Nicht-Victim-Verkehr zwischen Knoten eines Prozessors;
wobei jeder der Prozessorknoten Folgendes umfasst:
eine Vielzahl von Recheneinheiten, die mit einem Kreuzschienenschalter verbunden ist, wobei der Kreuzschienenschalter konfiguriert ist, um einen Verkehr zu steuern, der von den Recheneinheiten an eine benannte Verbindung gesendet wird;
wobei des Satz von Anweisungen **gekennzeichnet ist durch**:
Auswählen **durch** eine Recheneinheit des ersten Prozessorknotens **durch** ein Einstellen eines Steuerregisters, das ein definiertes Führungsschema, das die benannte Verbindung bestimmt, eines Führungsschemas für den Victim-Verkehr, das die kohärenten Verbindungen mit einer hohen Bandbreite zwischen den Knoten nutzt, und eines Führungsschemas für Nicht-Victim-Verkehr aufweist, das die kohärente Verbindung mit einer geringen Bandbreite zwischen den Knoten nutzt.

14. Medium nach Anspruch 13, wobei der Victim-Verkehr auf den kohärenten Verbindungen mit einer hohen Bandbreite eine gekoppelte Zwei-Sprung-Anfrage einschließt und der Nicht-Victim-Verkehr auf der kohärenten Verbindung mit geringer Bandbreite eine nichtgekoppelte Ein-Sprung-Anfrage einschließt.

## Revendications

1. Procédé de routage de trafic victime dans un multiprocesseur réparti à mémoire partagée et à cohérence de cache (200) comprenant :
un premier noeud de processeur (110) relié à un deuxième noeud de processeur (140) par une liaison cohérente à faible bande passante (261) ;
un troisième noeud de processeur (120) relié au premier noeud de processeur par une première liaison cohérente à large bande passante (251) et relié au deuxième noeud de processeur par une seconde liaison cohérente à large bande passante (254) ;
une pluralité de mémoires caches, comportant au moins une première mémoire cache couplée au premier noeud de processeur,
une deuxième mémoire cache couplée au deuxième noeud de processeur et une troisième mémoire cache couplée au troisième noeud de processeur, dans lequel le trafic victime représente les données expulsées d'au moins une de la pluralité de mémoires caches ; la surveillance du trafic victime et du trafic non victime entre les noeuds d'un processeur ;
dans lequel chacun des noeuds de processeur comprend :
une pluralité d'unités de calcul (105, 106, 107) reliées à un commutateur crossbar (112), le commutateur crossbar étant configuré pour commander le trafic envoyé des unités de calcul vers une liaison désignée ;
**caractérisé en ce que** le procédé comprend :
la sélection, par une unité de calcul du premier noeud de processeur par établissement d'un registre de commande (114) ayant un schéma de routage défini qui détermine la liaison désignée, d'un schéma de routage du trafic victime qui utilise les liaisons cohérentes à large bande passante entre les noeuds et d'un schéma de routage du trafic non victime qui utilise la liaison cohérente à faible bande passante entre les noeuds.

2. Procédé selon la revendication 1, dans lequel la sélection, par l'unité de calcul du premier noeud de processeur par établissement d'un registre de commande ayant le schéma de routage défini qui détermine la liaison désignée comporte en outre l'établissement d'un bit de mode de routage lorsque la répartition est activée pour une paire particulière de noeuds de processeur.

3. Procédé selon la revendication 2, dans lequel la sélection, par l'unité de calcul du premier noeud de processeur par établissement d'un registre de commande ayant le schéma de routage défini qui détermine la liaison désignée comporte en outre :
l'établissement d'un bit d'identification de noeud de répartition pour chacun des noeuds de processeur concernés par la répartition ; et
l'établissement d'un élément de destination de liaison.

4. Procédé selon la revendication 1, dans lequel la sélection, par l'unité de calcul du premier noeud de processeur par établissement d'un registre de commande ayant le schéma de routage défini qui détermine la liaison désignée comporte en outre l'établissement d'un bit d'activation de répartition cohérente des requêtes pour indiquer que le schéma de routage est activé pour traiter les requêtes victimes.

5. Procédé selon la revendication 1, dans lequel la sélection, par l'unité de calcul du premier noeud de processeur par établissement d'un registre de commande ayant le schéma de routage défini qui détermine la liaison désignée comporte en outre l'établissement d' un bit d'activation de répartition cohérente des requêtes pour indiquer que le schéma de routage est activé pour traiter les réponses victimes.

6. Procédé selon la revendication 1, dans lequel le trafic victime sur les liaisons cohérentes à large bande passante comporte une requête jumelée à deux bonds et le trafic non victime sur la liaison cohérente à faible bande passante comporte une requête non jumelée à un seul bond.

7. Multiprocesseur réparti à mémoire partagée et à cohérence de cache, comprenant :
un premier noeud de processeur relié à un deuxième noeud de processeur par une liaison cohérente à faible bande passante ;
un troisième noeud de processeur relié au premier noeud de processeur par une première liaison cohérente à large bande passante et relié au deuxième noeud de processeur par une seconde liaison cohérente à large bande passante ;
une pluralité de mémoires caches, comportant au moins une première mémoire cache couplée au premier noeud de processeur, une deuxième mémoire cache couplée au deuxième noeud de processeur et une troisième mémoire cache couplée au troisième noeud de processeur, dans lequel le trafic victime représente les données expulsées d'au moins une de la pluralité de mémoires caches ;
dans lequel chacun des noeuds de processeur comprend :
une pluralité d'unités de calcul reliées à un commutateur crossbar, le commutateur crossbar étant configuré pour commander le trafic envoyé des unités de calcul vers une liaison désignée ;
**caractérisé en ce que** :
les unités de calcul du premier noeud de processeur sont configurées pour établir un registre de commande ayant un schéma de routage défini qui détermine la liaison désignée, de sorte que lors de l'exécution du schéma de routage, le commutateur crossbar est commandé pour envoyer le trafic victime sur la première liaison cohérente à large bande passante et pour envoyer le trafic non victime sur la liaison cohérente à faible bande passante.

8. Processeur selon la revendication 7, dans lequel au moins une de la pluralité d'unités de calcul établit un bit de mode de routage dans le registre de commande lorsque la répartition est activée pour une paire particulière de noeuds de processeur.

9. Processeur selon la revendication 8, dans lequel au moins une de la pluralité d'unités de calcul établit un bit d'identification de noeud de répartition dans le registre de commande pour chacun des noeuds de processeur concernés par la répartition et établit un élément de destination de liaison.

10. Processeur selon la revendication 7, dans lequel au moins une de la pluralité d'unités de calcul établit un bit d'activation de répartition cohérente des requêtes dans le registre de commande pour indiquer que le routage est activé pour traiter les requêtes victimes.

11. Processeur selon la revendication 7, dans lequel au moins une de la pluralité d'unités de calcul établit un bit d'activation de répartition cohérente des requêtes dans le registre de commande pour indiquer que le routage est activé pour traiter les réponses victimes.

12. Processeur selon la revendication 7, dans lequel le trafic victime sur les liaisons cohérentes à large bande passante comporte une requête jumelée à deux bonds et le trafic non victime sur la liaison cohérente à faible bande passante comporte une requête non jumelée à un seul bond.

13. Support de stockage lisible par ordinateur stockant un ensemble d'instructions pour exécution par un ou plusieurs processeurs pour le routage de trafic victime dans un multiprocesseur réparti à mémoire partagée et à cohérence de cache comprenant :
un premier noeud de processeur relié à un deuxième noeud de processeur par une liaison cohérente à faible bande passante ;
un troisième noeud de processeur relié au premier noeud de processeur par une première liaison cohérente à large bande passante et relié au deuxième noeud de processeur par une seconde liaison cohérente à large bande passante ;
une pluralité de mémoires caches, comportant au moins une première mémoire cache couplée au premier noeud de processeur, une deuxième mémoire cache couplée au deuxième noeud de processeur et une troisième mémoire cache couplée au troisième noeud de processeur, dans lequel le trafic victime représente les données expulsées d'au moins une de la pluralité de mémoires caches ; la surveillance du trafic victime et du trafic non victime entre les noeuds d'un processeur ;
dans lequel chacun des noeuds de processeur comprend :
une pluralité d'unités de calcul reliées à un commutateur crossbar, le commutateur crossbar étant configuré pour commander le trafic envoyé des unités de calcul vers une liaison désignée ;
l'ensemble d'instructions étant **caractérisé par** :
la sélection, par une unité de calcul du premier noeud de processeur par établissement d'un registre de commande ayant un schéma de routage défini qui détermine la liaison désignée, d'un schéma de routage du trafic victime qui utilise les liaisons cohérentes à large bande passante entre les noeuds et d'un schéma de routage du trafic non victime qui utilise la liaison cohérente à faible bande passante entre les noeuds.

14. Support selon la revendication 13, dans lequel le trafic victime sur les liaisons cohérentes à large bande passante comporte une requête jumelée à deux bonds et le trafic non victime sur la liaison cohérente à faible bande passante comporte une requête non jumelée à un seul bond.
